**Europäisches Patentamt**

**European Patent Office**

**Office européen des brevets**

(19)

(11) Veröffentlichungsnummer : **0 221 263**
**B1**

(12) EUROPÄISCHE PATENTSCHRIFT

(45) Veröffentlichungstag der Patentschrift :
22.02.89

(51) Int. Cl.⁴ : **B 01 J 37/02**// B01J23/56

(21) Anmeldenummer : **86111160.7**

(22) Anmeldetag : **12.08.86**

(54) Verfahren zur Herstellung eines Trägerkatalysators.

(30) Priorität : **18.09.85 DE 3533250**

(43) Veröffentlichungstag der Anmeldung :
**13.05.87 Patentblatt 87/20**

(45) Bekanntmachung des Hinweises auf die Patenterteilung : **22.02.89 Patentblatt 89/08**

(84) Benannte Vertragsstaaten :
**AT BE CH DE FR GB IT LI NL SE**

(56) Entgegenhaltungen :
EP–A– 0 060 740
EP–A– 0 181 035
FR–A– 2 253 558

(73) Patentinhaber : **HOECHST AKTIENGESELLSCHAFT**
**Postfach 80 03 20**
**D-6230 Frankfurt am Main 80 (DE)**

(72) Erfinder : **Vogt, Wilhelm, Dr.**
**Bellerstrasse 74**
**D-5030 Hürth (DE)**
Erfinder : **Glaser, Hermann**
**Magdalenenweg 16**
**D-5042 Erftstadt (DE)**
Erfinder : **Goedicke, Eitel, Dr.**
**Asternweg 7**
**D-5010 Bergheim (DE)**

**Beschreibung**

Die vorliegende Erfindung betrifft ein Verfahren zur Herstellung eines Trägerkatalysators durch Aufbringen von Edelmetallen auf einen mit einer Schicht von Aluminiumoxid versehenen keramischen Wabenkörper.

Aus der GB-PS 1 425 721 ist ein Verfahren zur Herstellung eines Edelmetallkatalysators bekannt, bei welchem ein keramischer Wabenkörper zunächst mit einer Aluminiumoxid-Schicht überzogen wird. Nach Behandeln des mit der Aluminiumoxid-Schicht überzogenen Wabenkörpers mit Ammoniaklösung wird der Wabenkörper in eine Tränklösung eingetaucht, welche durch Behandeln mindestens einer Edelmetall-Chlor-Verbindung mit wäßriger Ammoniaklösung bei Temperaturen von 80 bis 90 °C erhalten worden war. Anschließend wird der Wabenkörper gewaschen, getrocknet und getempert.

Nachteilig ist bei dem bekannten Verfahren, daß der mit der Aluminiumoxid-Schicht überzogene Wabenkörper lange Zeit, beispielsweise einen Tag, in die Tränklösung eingetaucht werden muß, während verfahrenstechnisch eine Kurzzeittränkung in der Größenordnung von Minuten wünschenswert ist. Offensichtlich wird die über die durch Volumentränkung hinausgehende Edelmetallaufnahme durch den Träger infolge von Chemisorption verursacht.

Es ist daher Aufgabe der vorliegenden Erfindung, ein Verfahren zur Herstellung eines Trägerkatalysators durch Aufbringen von Edelmetallen auf einen keramischen Wabenkörper anzugeben, bei welchem der chemisorptive Anteil der Edelmetallaufnahme durch den Träger unter Verringerung der Bedeutung von Parametern (Vorbehandlungstemperatur des Trägers und seine Gehalte an Zusätzen und Verunreinigungen sowie Temperatur und Bewegung der Tränklösung) reduziert wird, so daß eine Steigerung der Geschwindigkeit der Tränkung des Trägers ohne Nachteile möglich ist. Das wird erfindungsgemäß dadurch erreicht, daß man den Wabenkörper in einer wäßrigen Lösung tränkt, welche Nitrilotriessigsäure oder Ethylendiaminotetraessigsäure, Ammoniak und mindestens eine Edelmetall-Verbindung enthält, wobei man den Wabenkörper zur Tränkung bis zu 60 Minuten, vorzugsweise bis zu 5 Minuten, kontinuierlich von der Lösung durchströmen läßt ; daß man den getränkten Wabenkörper bei Temperaturen von 20 bis 250 °C trocknet und bei 250 bis 1 000 °C tempert ; und daß man gegebenenfalls erneut die Lösung durch den Wabenkörper strömen läßt und die Trocknung und die Temperung wiederholt.

Das Verfahren gemäß der Erfindung kann wahlweise auch dadurch ausgestaltet sein, daß

a) die Lösung durch Eintragen von mindestens einer Edelmetall-Verbindung in eine ammoniakalische Lösung von Nitrilotriessigsäure oder Ethylendiaminotetraessigsäure unter Rühren erhalten wurde ;

b) die Lösung durch Eintragen von fester Nitrilotriessigsäure oder Ethylendiaminotetraessigsäure in eine wäßrige Lösung mindestens einer Edelmetall-Verbindung und Zugeben von Ammoniaklösung bis zur Einstellung eines pH-Wertes von 10 unter intensivem Rühren erhalten wurde ;

c) man der wäßrigen Lösung mindestens einer Edelmetall-Verbindung ein Salz mindestens eines Seltenerdmetalles hinzufügt ;

d) man ein Cersalz hinzufügt ;

e) man ein Praseodymsalz hinzufügt ;

f) man ein Salz von Seltenerdgemischen, vorzugsweise ein Didymsalz, hinzufügt ;

g) man der wäßrigen Lösung mindestens einer Edelmetall-Verbindung ein Zirkonsalz hinzufügt ;

h) man der wäßrigen Lösung mindestens einer Edelmetall-Verbindung ein Eisensalz hinzufügt ;

i) man der wäßrigen Lösung mindestens einer Edelmetall-Verbindung ein Nickelsalz hinzufügt.

Beim erfindungsgemäßen Verfahren werden Tränklösungen verwendet, welche die Edelmetallsalze als Komplexverbindungen enthalten ; und zwar als Komplexbildner substituierte Essigsäuren, vorzugsweise Nitrilotriessigsäure oder Ethylendiaminotetraessigsäure. Dabei kann das Molverhältnis von Edelmetallsalz zu substituierter Essigsäure in der Tränklösung 1 : 1,5 bis 1 : 4 betragen, wobei sich bei Nitrilotriessigsäure ein Molverhältnis von 1 : 2 bis 1 : 4 und bei Ethylendiaminotetraessigsäure ein Molverhältnis von 1 : 1,5 bis 1 : 3 empfiehlt.

Beim Verfahren gemäß der Erfindung werden als Edelmetallverbindungen vorteilhafterweise die Chloride oder Chlorid-Hydrate oder Chlorosäuren des Rutheniums, Palladiums, Rhodiums, Iridiums oder Platins, beispielsweise $RuCl_3$, $PdCl_2$, $RhCl_2 \cdot 4H_2O$, $IrCl_3 \cdot 3H_2O$, $H_2[PtCl_6] \cdot 6H_2O$, verwendet.

Beim erfindungsgemäßen Verfahren wird eine weitere Senkung des chemisorptiven Anteils der Edelmetallaufnahme durch den Träger durch die Anwesenheit von Ammoniumsalzen in der Tränklösung bewirkt. Dabei können über die Ammoniumsalze, welche sich bei der alkalischen Einstellung der Komplexlösung mit Ammoniak bilden, hinaus noch weitere Ammoniumsalze zugesetzt werden.

Beim Verfahren gemäß der Erfindung wird eine vollständige Unterdrückung der Edelmetall-Chemisorption erreicht, wenn der Edelmetall-Komplex-Lösung zusätzlich Komplexe seltener Erden zugesetzt werden, beispielsweise ein 10 bis 16-facher molarer Überschuß des Nitrilotriessigsäure-Komplexes des Praseodyms, bezogen auf die Nitrilotriessigsäure-Komplexe der Edelmetalle. Auch der Strontiumkomplex der Nitrilotriessigsäure unterdrückt die Chemisorption.

Beim erfindungsgemäßen Verfahren kann die Tränkung der Wabenkörper in der die Edelmetall-Komplexverbindungen enthaltenden Lösung bei Temperaturen von 0 bis 100 °C, vorzugsweise bei Raumtemperatur, erfolgen.

Die nach dem Verfahren gemäß der Erfindung hergestellten Trägerkatalysatoren eignen sich zur Reinigung der Abgase von Brennkraftmaschinen sowie zur Hydrierung und Isomerisierung. Bei der zuerst genannten Anwendung zeigen diese Katalysatoren eine besonders hohe Aktivität.

### Beispiel 1 (Vergleichsbeispiel)

Aus einem aus Cordierit bestehenden Wabenkörper, welcher nach einer Zwischenbelegung mit 22,3 Gewichts% $\gamma$-Aluminiumoxid und Glühen bei 600 °C eine BET-Oberfläche von 30 m$^2$/g aufwies, wurden Kerne mit etwa 2,5 cm Durchmesser ausgebohrt. Die Kerne wurden in etwa 3,5 cm lange Zylinder zerschnitten. Das durchschnittliche Gewicht einer Zylinder-Wabe betrug etwa 11 g, ihr Wasseraufnahmevermögen wurde zu 3,5 g bestimmt. Es wurden 2 Tränklösungen angesetzt :

a) $H_2[PtCl_6]$-Lösung mit 6,47 g Pt/l
b) $RhCl_3$-Lösung mit 2,70 g Rh/l

Je 5 Zylinder-Waben wurden verschiedene Zeiten in die Tränklösung eingetaucht (vergl. die Tabelle). Es wird deutlich, daß selbst nach 24 Stunden die Chemisorption noch immer nicht vollständig beendet ist.

### Tabelle

|  | Zylinder-Wabe | | Tränklösung | |
|---|---|---|---|---|
|  | mg Pt/kg | mg Rh/kg | mg Pt/kg | mg Rh/kg |
| Pt-haltige Lösung (a) | – | – | 6600 | – |
| Probe 1 (nach 10 s) | 3300 | – | 6100 | – |
| 2 (nach 60 s) | 4250 | – | 5500 | – |
| 3 (nach 15 min.) | 5550 | – | 4950 | – |
| 4 (nach 60 min.) | 6250 | – | 4550 | – |
| 5 (nach 24 h) | 7300 | – | 3950 | – |
| Rh-haltige Lösung (b) | – | – | – | 1200 |
| Probe 1 (nach 10 s) | – | 650 | – | 1050 |
| 2 (nach 60 s) | – | 900 | – | 950 |
| 3 (nach 15 min.) | – | 2000 | – | 600 |
| 4 (nach 60 min.) | – | 2750 | – | 350 |
| 5 (nach 24 h) | – | 3350 | – | 100 |

### Beispiel 2 (gemäß der Erfindung)

In eine ammoniakalische Lösung von Nitrilotriessigsäure (NTE) wurde eine wäßrige Lösung von $H_2[PtCl_6]$ und $RhCl_3$ im Molverhältnis Pt : Rh = 5 : 1 unter Rühren eingetragen. Es resultierte eine klare, hellgelbe Lösung mit einem Molverhältnis (Pt + Rh) : NTE = 1 : 2, welche nach Verdünnung auf Gehalte von 3 200 mg Pt und 640 mg Rh pro Liter Lösung als Tränklösung diente.
Durch einen aus Cordierit bestehenden Wabenkörper mit einem Volumen von 1,24 l, welcher nach einer Zwischenbelegung mit 22,3 Gewichts% $\gamma$-Aluminiumoxid und Glühen bei 600 °C eine BET-Oberfläche von 30 m$^2$/g aufwies, ließ man 2 l Tränklösung 1 Minute lang kontinuierlich hindurchströmen. Danach enthielt die Lösung noch 3 070 mg Pt/l und 560 mg Rh/l.
Mithin war die Lösung durch Chemisorption um 130 mg Pt/l und 80 mg Rh/l verarmt.

### Beispiel 3 (gemäß der Erfindung)

In eine ammoniakalische Lösung von Nitrilotriessigsäure, welche auf pH 10 eingestellt war, wurde eine wäßrige Lösung von $H_2[PtCl_6]$, $RhCl_3$ und $Ce(NO_3)_3$ im Gewichtsverhältnis Pt : Rh : Ce = 5 : 1 : 32 unter Rühren eingetragen, wobei zur Konstanthaltung des pH-Wertes kontinuierlich Ammoniak zugegeben wurde und wobei das Molverhältnis (Pt + Rh + Ce) : NTE = 1 : 2 betrug. Nach Verdünnen mit Wasser wurde eine Tränklösung erhalten, welche 5 000 mg Pt, 1 000 mg Rh und 32 500 mg Ce pro Liter enthielt.

Durch einen Wabenkörper gemäß Beispiel 2 ließ man 2 l Tränklösung 1 Minute lang kontinuierlich hindurchströmen. Danach konnte keine Verringerung der Metallkonzentration der Tränklösung festgestellt werden.

### Beispiel 4 (gemäß der Erfindung)

Analog Beispiel 3 wurde eine Tränklösung hergestellt, welche 3 150 mg Pt, 625 mg Rh und 36 500 mg Pr pro Liter enthielt.

Diese Tränklösung wies nach ihrem kontinuierlichen Hindurchströmen durch den Wabenkörper keine Verringerung ihrer Metallkonzentration auf.

### Beispiel 5 (gemäß der Erfindung)

Beispiel 4 wurde mit der Änderung wiederholt, daß anstelle von Nitrilotriessigsäure Ethylendiaminotetraessigsäure (EDTA) verwendet wurde, wobei das Molverhältnis (Pt + Rh + Pr) : EDTA = 1 : 1,5 betrug.

Die Tranklösung wies nach ihrem kontinuierlichen Hindurchströmen durch den Wabenkörper keine Verringerung ihrer Metallkonzentration auf.

### Beispiel 6

In eine Lösung von 30,3 g $H_2[PtCl_6]$, 6,38 g $RhCl_3$ und 448,38 g $Zr(NO_3)_4$ in 1,3 l Wasser wurden unter Rühren 305 g freie Nitrilotriessigsäure eingetragen und anschließend solange konzentrierte Ammoniaklösung eingetropft, bis alles gelöst war. Die klare ammoniakalische Lösung wurde durch weitere Zugabe von Ammoniaklösung auf pH 10 eingestellt und mit Wasser auf ein Volumen von 2 l verdünnt. Die klare, hellgelbe Tränklösung enthielt nunmehr 6,06 g Pt, 1,21 g Rh und 44,8 g $ZrO_2$ pro Liter. Auf einen Wabenkörper, welcher mit 120 g Aluminiumoxid beschichtet war und ein Gesamtgewicht von 650 g sowie ein Wasseraufnahmevermögen von 120 g aufwies, wurden durch kontinuierliches Hindurchströmen der Tränklösung 0,72 g Pt, 0,15 g Rh und 5,37 g $ZrO_2$ aufgetragen. Der belegte Wabenkörper wurde bis 250 °C getrocknet und anschließend bei 550 °C getempert.

Durch Wiederholung des Tränkvorganges einschließlich Trocknung und Temperung in der gleichen Lösung läßt sich ein ganzzahliges Vielfaches der Belegungsmenge erreichen.

### Beispiel 7 (gemäß der Erfindung)

Beispiel 6 wurde mit der Änderung wiederholt, daß bei der Bereitung der Tränklösung anstelle der Nitrilotriessigsäure 350 g Ethylendiaminotetraessigsäure eingetragen wurden.

Zusammensetzung und Eigenschaften des resultierenden Katalysators blieben dadurch im wesentlichen unverändert.

### Beispiel 8 (gemäß der Erfindung)

In eine wäßrige Lösung aus 143,6 g $Ce(NO_3)_3 \cdot 3H_2O$, 320,0 g $Zr(NO_3)_4$, 22,03 g $H_2 [PtCl_6]$ und 4,65 g $RhCl_3$ wurde nach Einrühren von 352 g fester Nitrilotriessigsäure solange Ammoniak eingegeben, bis alles gelöst war. Nach Einstellung von pH 10 durch Zugabe von weiterem wäßrigem Ammoniak wurde auf 2 l aufgefüllt. Die klare, gelblich gefärbte Tränklösung enthielt 4,41 g Pt, 0,88 g Rh, 32,0 g $ZrO_2$ und 28,5 g $CeO_2$ pro Liter.

Auf einen Wabenkörper, welcher bei einem Gesamtgewicht von 850 g ein Volumen von 1,24 l, eine Aluminiumoxid-Beschichtung von 18 % und ein Wasseraufnahmevermögen von 165 g aufwies, wurden durch zweimaliges kontinuierliches Hindurchströmen der Tränklösung von jeweils 1 Minute nach zwischenzeitlicher Trocknung bis 250 °C und Temperung bei 550 °C 1,45 g Pt, 0,29 g Rh, 0,9 % Ce und 0,9 % Zr aufgetragen.

### Beispiel 9 (gemäß der Erfindung)

In eine wäßrige Lösung aus 178 g $Fe(NO_3)_3 \cdot 9H_2O$, 172 g $Ce(NO_3)_3 \cdot 6H_2O$, 382 g $Zr(NO_3)_4$, 27,96 g $H_2[PtCl_6]$ und 5,91 g $RhCl_3$ wurden unter Rühren 580 g Nitrilotriessigsäure eingetragen und solange konzentrierte wäßrige Ammoniaklösung zugegeben, bis eine klare Lösung mit pH 10 vorlag. Dann wurde die Tränklösung auf 2 l aufgefüllt. Auf einen Wabenkörper mit einem Gesamtgewicht von 800 g, welcher eine Aluminiumoxid-Beschichtung von 16 % und ein Wasseraufnahmevermögen von 130 g aufwies, wurden durch zweimaliges kontinuierliches Hindurchströmen der Tränklösung von jeweils 1 Minute nach zwischenzeitlicher Trocknung bis 250 °C und Temperung bei 600 °C 1,45 g Pt, 0,29 g Rh, 0,9 % Ce, 0,9 % Zr und 0,4 % Fe aufgetragen.

**EP 0 221 263 B1**

Beispiel 10 (gemäß der Erfindung)

In die wäßrige Lösung analog Beispiel 9, jedoch ohne Cernitrat, wurden 430 g Nitrilotriessigsäure eingetragen und solange konzentrierte wäßrige Ammoniaklösung zugegeben, bis eine klare Lösung mit pH 10 vorlag. Dann wurde die Tränklösung auf 2 l aufgefüllt.

Es wurde der gleiche Wabenkörper wie in Beispiel 9 verwendet, welcher auch analog diesem Beispiel getränkt wurde. Der resultierende Trägerkatalysator wies Gehalte von 1,45 g Pt, 0,29 g Rh, 0,9 % Zr und 0,4 % Fe auf.

Beispiel 11 (gemäß der Erfindung)

In eine wäßrige Lösung aus 171 g Ce(NO$_3$)$_3$ · 6H$_2$O, 178 g Fe(NO$_3$)$_3$ · 9H$_2$O, 213 g Ni(NO$_3$)$_2$ · 6H$_2$O, 27,96 g H$_2$[PtCl$_6$] und 5,91 g RhCl$_3$ wurde nach Einrühren von 630 g Nitrilotriessigsäure solange Ammoniak eingegeben, bis alles gelöst und pH 10 eingestellt war.

Es wurde der gleiche Wabenkörper wie in Beispiel 9 verwendet, welcher auch analog diesem Beispiel getränkt wurde. Der resultierende Trägerkatalysator wies Gehalte von 1,45 g Pt, 0,29 g Rh, 0,9 % Ce, 0,4 % Fe und 0,7 % Ni auf.

Beispiel 12 (gemäß der Erfindung)

In eine wäßrige Lösung aus 171 g Ce(NO$_3$)$_3$ · 6H$_2$O, 382 g Zr (NO$_3$)$_4$, 14 g H$_2$[PtCl$_6$] und 28 g PdCl$_2$ wurde nach Einrühren von 430 g fester Nitrilotriessigsäure solange konzentrierte wäßrige Ammoniaklösung eingegeben, bis alles gelöst und pH 10 eingestellt war.

Es wurde der gleiche Wabenkörper wie in Beispiel 9 verwendet, welcher auch analog diesem Beispiel getränkt wurde. Der resultierende Trägerkatalysator wies Gehalte von 0,72 g Pt, 0,72 g Pd, 0,9 % Ce und 0,9 % Zr auf.

**Patentansprüche**

1. Verfahren zur Herstellung eines Trägerkatalysators durch Aufbringen von Edelmetallen auf einen mit einer Schicht von Aluminiumoxid versehenen keramischen Wabenkörper, dadurch gekennzeichnet, daß man den Wabenkörper zur Tränkung bis zu 60 Minuten, vorzugsweise bis zu 5 Minuten, kontinuierlich von einer wäßrigen Lösung durchströmen läßt, welche Nitrilotriessigsäure oder Ethylendiaminotetraessigsäure, Ammoniak und mindestens eine Edelmetall-Verbindung enthält ; daß man den getränkten Wabenkörper bei Temperaturen von 20 bis 250 °C trocknet und bei 250 bis 1 000 °C tempert ; und daß man gegebenenfalls den Wabenkörper erneut von der Lösung durchströmen läßt und die Trocknung und die Temperung wiederholt.

2. Verfahren nach Anspruch 1, dadurch gekennzeichnet, daß die Lösung durch Eintragen von mindestens einer Edelmetall-Verbindung in eine ammoniakalische Lösung von Nitrilotriessigsäure oder Ethylendiaminotetraessigsäure unter Rühren erhalten wurde.

3. Verfahren nach Anspruch 1, dadurch gekennzeichnet, daß die Lösung durch Eintragen von fester Nitrilotriessigsäure oder Ethylendiaminotetraessigsäure in eine wäßrige Lösung mindestens einer Edelmetall-Verbindung und Zugeben von Ammoniaklösung bis zur Einstellung eines pH-Wertes von 10 unter intensivem Rühren erhalten wurde.

4. Verfahren nach einem der Ansprüche 1 bis 3, dadurch gekennzeichnet, daß man der wäßrigen Lösung mindestens einer Edelmetall-Verbindung ein Salz mindestens eines Seltenerdmetalles hinzufügt.

5. Verfahren nach Anspruch 4, dadurch gekennzeichnet, daß man ein Cersalz hinzufügt.

6. Verfahren nach Anspruch 4, dadurch gekennzeichnet, daß man ein Praseodymsalz hinzufügt.

7. Verfahren nach Anspruch 4, dadurch gekennzeichnet, daß man ein Salz von Seltenerdgemischen, vorzugsweise ein Didymsalz, hinzufügt.

8. Verfahren nach einem der Ansprüche 1 bis 7, dadurch gekennzeichnet, daß man der wäßrigen Lösung mindestens einer Edelmetall-Verbindung ein Zirkonsalz hinzufügt.

9. Verfahren nach einem der Ansprüche 1 bis 8, dadurch gekennzeichnet, daß man der wäßrigen Lösung mindestens einer Edelmetall-Verbindung ein Eisensalz hinzufügt.

10. Verfahren nach einem der Ansprüche 1 bis 9, dadurch gekennzeichnet, daß man der wäßrigen Lösung mindestens einer Edelmetall-Verbindung ein Nickelsalz hinzufügt.

**Claims**

1. A process for producing a supported catalyst by applying rare metals to a ceramic honeycomb body provided with a layer of alumina, which comprises allowing an aqueous solution, which contains nitrilotriacetic acid or ethylenediaminetetraacetic acid, ammonia and at least one rare metal compound, to flow through the honeycomb body for up to 60 minutes, preferably for up to 5 minutes, for

5

impregnation, drying the impregnated honeycomb body at temperatures from 20 to 250 °C and heat-treating it at 250 to 1,000 °C and, if desired, allowing the solution once more to flow through the honeycomb body and repeating the drying and heat-treatment.

2. The process as claimed in claim 1, wherein the solution was obtained by introducing at least one rare metal compound into an ammoniacal solution of nitrilotriacetic acid or ethylenediaminetetraacetic acid with stirring.

3. The process as claimed in claim 1, wherein the solution was obtained by introducing solid nitrilotriacetic acid or ethylenediaminetetraacetic acid into an aqueous solution of at least one rare metal compound and adding ammonia solution with intensive stirring until a pH value of 10 is established.

4. The process as claimed in any of claims 1 to 3, wherein a salt of at least one rare earth metal is added to the aqueous solution of at least one rare metal compound.

5. The process as claimed in claim 4, wherein a cerium salt is added.

6. The process as claimed in claim 4, wherein a praseodymium salt is added.

7. The process as claimed in claim 4, wherein a salt of rare earths mixtures, preferably a didymium salt, is added.

8. The process as claimed in any of claims 1 to 7, wherein a zirconium salt is added to the aqueous solution of at least one rare metal compound.

9. The process as claimed in any of claims 1 to 8, wherein an iron salt is added to the aqueous solution of at least one rare metal compound.

10. The process as claimed in any of claims 1 to 9, wherein a nickel salt is added to the aqueous solution of at least one rare metal compound.

**Revendications**

1. Procédé pour fabrication d'un catalyseur sur support par dépôt de métaux nobles sur un corps céramique en nid d'abeilles muni d'une couche d'oxyde d'aluminium, caractérisé en ce que l'on fait passer en continu pour l'imprégnation dans le corps en nid d'abeilles jusqu'à 60 min, de préférence jusqu'à 5 min, une solution aqueuse qui contient de l'acide nitrilotriacétique ou de l'acide éthylènediaminetétraacétique, de l'ammoniaque et au moins un composé de métal noble ; en ce que l'on sèche le corps en nid d'abeilles à une température de 20 à 250 °C et on le recuit à 25 jusqu'à 1 000 °C ; et en ce que l'on fait éventuellement passer à nouveau la solution dans le corps en nid d'abeilles et on répète le séchage et le recuit.

2. Procédé selon la revendication 1, caractérisé en ce que la solution a été obtenue par introduction d'au moins un composé de métal noble en agitant dans une solution ammoniacale d'acide nitrilotriacétique ou d'acide éthylènediaminetétraacétique.

3. Procédé selon la revendication 1, caractérisé en ce que la solution a été obtenue par introduction d'acide nitrilotriacétique ou d'acide éthylènediaminetétraacétique solide dans une solution aqueuse d'au moins un composé de métal noble et addition de solution d'ammoniaque en agitant vigoureusement jusqu'à établissement d'un pH de 10.

4. Procédé selon l'une des revendications 1 à 3, caractérisé en ce que l'on ajoute à la solution aqueuse d'au moins un composé de métal noble un sel d'au moins un métal des terres rares.

5. Procédé selon la revendication 4, caractérisé en ce que l'on ajoute un sel de cérium.

6. Procédé selon la revendication 4, caractérisé en ce que l'on ajoute un sel de praseodyme.

7. Procédé selon la revendication 4, caractérisé en ce que l'on ajoute un sel de mélanges des terres rares, de préférence un sel de didyme.

8. Procédé selon l'une des revendications 1 à 7, caractérisé en ce que l'on ajoute à la solution aqueuse d'au moins un composé de métal noble un sel de zirconium.

9. Procédé selon l'une des revendications 1 à 8, caractérisé en ce que l'on ajoute à la solution aqueuse d'au moins un composé de métal noble un sel de fer.

10. Procédé selon l'une des revendications 1 à 9, caractérisé en ce que l'on ajoute à la solution aqueuse d'au moins un composé de métal noble un sel de nickel.